# DEMANDE DE BREVET EUROPEEN

(11) **EP 1 204 047 A1**
(43) Date de publication de la demande: **08.05.2002**
(21) Numéro de dépôt: 00123217.2
(22) Date de dépôt: 26.10.2000
(51) Int. Cl.: G06F 17/60

(54) **Procédé de gestion de la chaîne d'approvisionnement d'un bien ou d'un service de consommation répétitive**

(71) Demandeur: Cesa, Fabio, 1023 Crissier (CH); Mossier, Jean-Luc, 1617 Remaufens (CH)
(72) Inventeur: Cesa, Fabio, 1023 Crissier (CH); Mossier, Jean-Luc, 1617 Remaufens (CH)
(74) Mandataire: Micheli & Cie

(57) **Abrégé**

Procédé de gestion de la chaîne d'approvisionnement et de distribution d'un bien de consommation répétitive comprenant les étapes suivantes:
acquisition de données sur le site de consommation à l'aide d'un capteur (3) permettant de connaître la quantité de produit restante, transfert des grandeurs mesurées par l'intermédiaire d'une unité de transmission (10) vers un serveur de bases de données (17) à intervalle de temps prédéterminé, réception et consolidation des grandeurs mesurées en provenance des différents sites de mesures, puis génération automatique d'une transaction d'achat lorsque les grandeurs mesurées sont inférieures à une valeur de consigne.
L'invention a également pour objet une installation pour la mise en oeuvre du procédé dans le cadre de la gestion de la chaîne d'approvisionnement en huile de chauffage d'au moins un site équipé d'une unité de mesure.

## Description

La présente invention concerne un procédé de gestion et d'optimisation de la chaîne d'approvisionnement d'un bien ou d'un service de consommation répétitive. En particulier, l'invention a pour objet un procédé qui permet la gestion et l'optimisation de la chaîne d'approvisionnement et de distribution d'un bien de consommation courant sans intervention directe du consommateur. L'invention a également pour objet une installation pour la mise en oeuvre du procédé précité.

A titre d'exemple non limitatif, le procédé et l'installation objets de l'invention vont être décrits en référence à la gestion de la chaîne d'approvisionnement en huile de chauffage d'au moins une citerne domestique ou collective.

Traditionnellement, les opérations relatives à la gestion et à l'approvisionnement d'un bien de consommation répétitive tel que de l'huile de chauffage à usage domestique ou du mazout s'effectue de manière manuelle sans aucune automatisation. Il incombe au consommateur de vérifier à intervalles réguliers le niveau d'huile de chauffage contenu dans sa citerne en consultant, par exemple, la jauge extérieure équipant la citerne. Lorsque le niveau est jugé insuffisant, l'utilisateur contacte son fournisseur et passe une commande. Ce dernier organise alors la livraison. Cette séquence d'opération, même si elle a fait ses preuves, puisque utilisée jusqu'alors, présente certains inconvénients qui seront brièvement résumés ci-dessous.

Un premier inconvénient de cette méthode traditionnelle est relatif au risque de pannes de l'installation de chauffage résultant d'un oubli ou d'une erreur de lecture lors de la vérification du niveau de la jauge par l'utilisateur. D'autre part, le consommateur qui doit commander du mazout, après avoir constaté que sa citerne est presque vide, n'a que peu de marge de manoeuvre pour négocier un prix attractif auprès de son fournisseur.

Du côté du fournisseur de marchandises, on constate également de nombreux inconvénients inhérents au mode de commandes manuelles précédemment décrit. En effet, le fournisseur n'a aucun moyen d'anticiper la demande et de gérer efficacement le réapprovisionnement et/ou la constitution de ses stocks. De plus les demandes sont aléatoires et n'arrivent qu'au coup par coup, de sorte qu'il est difficile de planifier efficacement la livraison de la marchandise.

Le procédé objet de l'invention a pour but d'obvier aux inconvénients mentionnés ci-dessus en proposant un procédé de gestion et d'optimisation de la chaîne d'approvisionnement d'un bien de consommation qui se distingue par les caractéristiques énumérées à la revendication 1. L'invention a également pour objet une installation pour la mise en oeuvre du procédé qui se distingue par les caractéristiques énoncées à la revendication 4.

D'autres avantages ressortent des caractéristiques des revendications dépendantes et de la description qui suit en référence aux dessins qui illustrent schématiquement et à titre d'exemple une forme d'exécution de l'installation pour la mise en oeuvre du procédé de gestion.

La figure 1 est une vue schématique d'une cuve de mazout dans laquelle est agencée l'unité de mesure de l'installation.

La figure 2 illustre le détail des composants formant l'unité de mesure.

La figure 3 illustre de manière schématique les composants nécessaires à la transmission et au traitement des grandeurs mesurées par les éléments représentés aux figures 1 et 2.

Le procédé objet de l'invention va maintenant être décrit de façon générique puis en référence à une application particulière qui consiste à gérer et à optimiser la chaîne d'approvisionnement d'huile de chauffage domestique.

De manière générale, le but du procédé objet de l'invention consiste à décharger le consommateur de la gestion en approvisionnement de produits ou de services qui nécessitent des actes d'achat répétitifs basés sur une décision d'achat. A cet effet les prestations découlant du procédé sont proposées au consommateur sur la base d'un contrat de gestion du flux de marchandises.

La détection du besoin est déterminée par un capteur situé sur le site du consommateur et les grandeurs mesurées sont transmises, à intervalles de temps déterminés, grâce à des moyens de télécommunication, vers un centre serveur de base de données. Les grandeurs mesurées sont transmises de préférence par des moyens de télécommunication sans fils qui ne nécessitent donc pas de câblage vers le consommateur. Dans certaines circonstances, la précision des grandeurs mesurées peut être affectée par des conditions indépendantes de l'unité de mesure. Dans ce cas, des paramètres externes sont corrélés aux grandeurs mesurées sur le site pour améliorer la précision des mesures.

Les données transmises provenant d'une multitude de sites sont ensuite consolidées afin d'initier une transaction d'achats groupés auprès d'un fournisseur. Cette transaction d'achats peut être automatique et directe ou encore comporter des étapes supplémentaires consistant par exemple à sélectionner un fournisseur parmi plusieurs en fonction de critères économiques ou relatifs aux délais de livraison.

On comprend aisément à ce stade les avantages qui découlent de la mise en oeuvre d'un tel procédé. Le consommateur n'a plus à se soucier de vérifier manuellement la quantité de produit et de ce fait le risque de panne est considérablement réduit. Le fournisseur, grâce aux données transmises en temps réel et actualisées à intervalles déterminés, est à même de gérer efficacement ses stocks, de même que les livraisons à ses clients. Il peut en outre optimiser ses achats à terme auprès des producteurs en groupant les commandes et en anticipant les quantités requises. Enfin les transactions peuvent être complètement automatisées de sorte que les frais administratifs en découlant sont considérablement réduits.

Le procédé décrit ci-dessus va maintenant être appliqué à une utilisation particulière relative à la gestion de l'approvisionnement d'un bien de consommation courante en l'occurrence de l'huile de chauffage. Ce procédé et l'installation qui permet sa mise en oeuvre vont être décrits dans le cadre de la distribution de mazout à des organismes de gérance de bâtiments tels que des régies immobilières ou industrielles. L'installation est également adaptée à la distribution de carburant dans les stations-service par exemple.

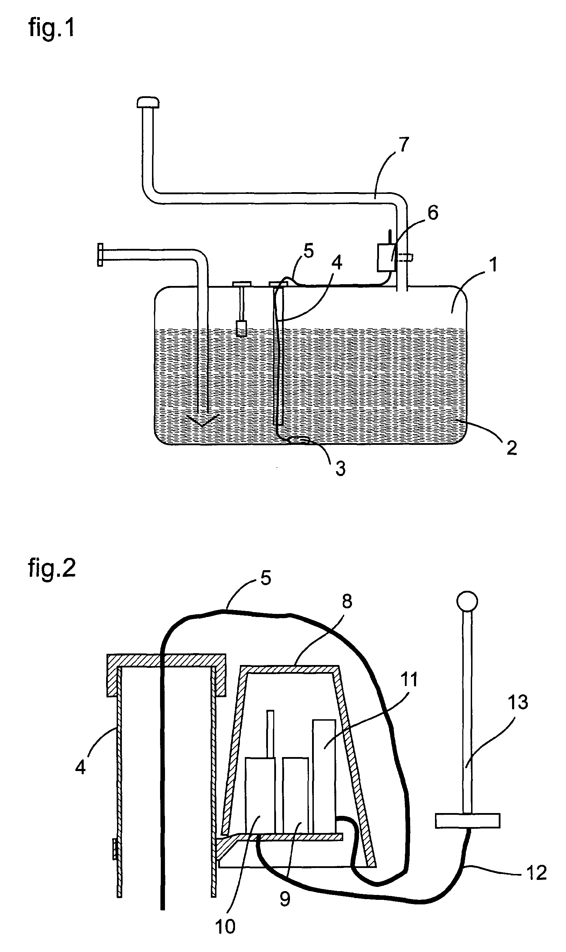

La figure 1 illustre schématiquement une citerne 1 ou cuve contenant un produit pétrolier 2. Un capteur de pression 3 est introduit dans la cuve 1 par exemple par le conduit 4 permettant de mesurer le niveau de mazout et repose au fond de la cuve 1. Le capteur de pression 3 est relié à l'aide d'un câble 5 à une unité de contrôle 6 située à l'extérieur de la citerne, par exemple sur l'évent 7 de la citerne.

Le capteur de pression 3 est constitué d'un transducteur de pression comportant un pont de Wheastone agencé sur un support en céramique. De tels capteurs céramiques à couche épaisse sont connus en tant que tels.

Les déformations dues à la pression exercée sur la membrane produisent un courant qui est transmis par le câble 5 à l'unité de contrôle 6 qui sera décrite ci-dessous. La mesure de la pression hydrostatique à l'intérieur de la citerne permet de connaître la hauteur et donc le volume de mazout contenu dans la citerne. Une mesure de la pression atmosphérique sur site à l'aide du capteur de pression 3, avant de le plonger dans la cuve de mazout, permet de réaliser une auto-calibration du capteur. Le capteur de pression 3 est encapsulé de manière étanche dans un container adapté pour résister à un environnement agressif comme de l'huile de chauffage ou de l'essence. L'énergie nécessaire à son fonctionnement ainsi que le signal résultant des mesures effectuées sont transmis au câble 5 au moyen d'une jonction inductive. D'autres types de capteurs de pression connus peuvent également être utilisés sans sortir du cadre de l'invention.

L'unité de contrôle 6 a plusieurs fonctions et une vue schématique des composants la constituant est représentée à la figure 2. Elle comporte, dans un boîtier étanche 8, un module d'alimentation 9 qui fournit l'énergie nécessaire aux différents composants ainsi qu'au capteur immergé 3. De préférence, le module d'alimentation 9 sera constitué de batteries interchangeables. L'unité de contrôle 6 comporte encore une unité de transmission 10 qui utilise de préférence un modem conforme au standard GSM et capable de transmettre et de recevoir des messages courts adhérant à la norme SMS (Small message system). Le modem GSM peut être relié à une antenne 13, située à l'extérieur du boîtier 8, par l'intermédiaire d'un câble 12 lorsque le signal ambiant GSM est trop faible et qu'il est en conséquence nécessaire de l'amplifier pour assurer la bonne transmission des grandeurs mesurées. Dans une variante, les données peuvent être transmises par le biais du réseau de satellites ORBCOM fonctionnant à 140 Mhz.

Enfin, un contrôleur 11 agencé dans le boîtier 8 est relié au capteur de pression 3 par un câble 5. Ce contrôleur 11 comprend au moins un processeur ou unité de calcul, de la mémoire vive et une mémoire non volatile. Un logiciel destiné à être exécuté sur le processeur de l'unité de contrôle permet de réaliser différentes fonctions logiques qui vont être décrites ci-dessous.

Le contrôleur 11 est entre autre programmé pour interroger à intervalles de temps déterminés le capteur de pression 3 situé dans la cuve 1 de mazout et pour récupérer les données représentant la grandeur mesurée. Une fois ces données acquises, le logiciel du contrôleur 11 les met en forme, en y adjoignant par exemple un code unique identifiant le site de mesure et des données temporelles correspondant à l'instant auquel la mesure est effectuée. Ces données, selon les capacités de traitement du contrôleur 11 peuvent être sauvegardées localement dans une mémoire non volatile. D'autres données peuvent être selon les besoins ajoutées aux grandeurs mesurées pour faciliter la gestion ultérieure.

Les données ainsi mises en forme sont ensuite converties en une chaîne de caractères pour former un message SMS qui est transmis au modem de l'unité de transmission 10. Ce message SMS est ensuite envoyé sur le réseau de téléphonie mobile par exemple le réseau GSM.

L'unité de contrôle 11 est également programmée pour détecter et décoder un message SMS entrant sur l'unité de transmission 10. Grâce aux fonctions du logiciel implanté dans l'unité de contrôle 11, il est possible d'interroger le dispositif de mesure à distance en envoyant un message SMS comprenant une commande appropriée au module de transmission. Dans ce cas le contrôleur 11 décode le message SMS reçu par le modem GSM et agit en conséquence. Divers types de commandes peuvent être ainsi adressés à l'unité de contrôle 6 par l'envoi d'un message SMS. A titre d'exemple non limitatif, on peut citer des commandes relatives à la maintenance du système, telles que par exemple l'état de charge des batteries, la date de première mise en service ou la date de la dernière maintenance préventive effectuée. D'autres commandes concernent les paramètres de fonctionnement du dispositif et permettent d'ajuster par exemple l'intervalle de temps entre les mesures et/ou la fréquence à laquelle les mesures sont transmises par message SMS.

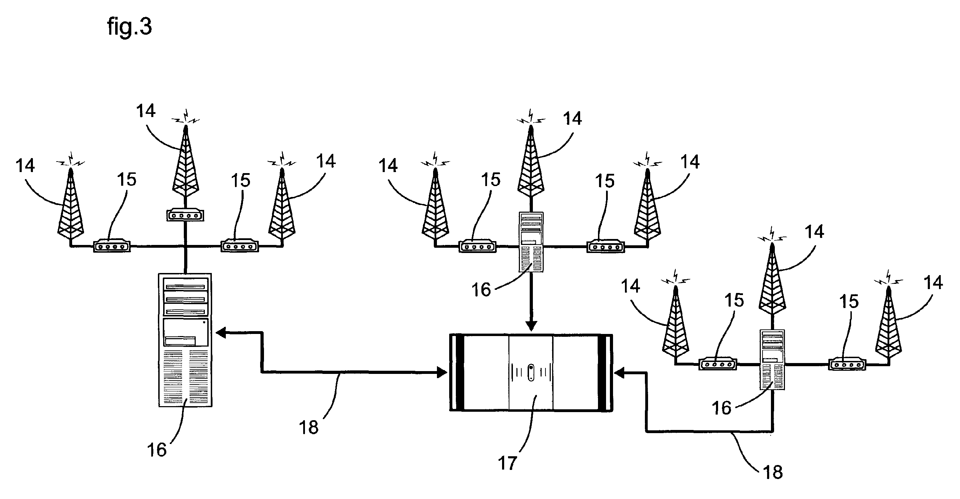

Ainsi l'unité de mesure située sur le site est complètement autonome et transmet les grandeurs mesurées à intervalles de temps déterminés vers une installation de réception et de traitement des données qui va être décrite plus en détail en référence à la figure 3. L'unité de réception comporte au moins un ordinateur 16 connecté à au moins un modem GSM 15 relié à une antenne 14. L'ordinateur 16 peut être constitué d'un ordinateur personnel traditionnel opérant sous les systèmes d'exploitation du marché tels que LINUX ou WINDOWS NT par exemple. Cette unité de réception reçoit les messages SMS émis depuis les unités de mesures. A réception d'un message SMS par le modem 15, ce dernier le transmet à l'ordinateur 16 qui le décode et le convertit en un fichier de données utilisable par un gestionnaire de base de données. Les messages SMS reçus sont alors sauvegardés localement dans l'ordinateur 16, mis en forme ou pré-traités dans un format de bases de données adéquat puis transmis par l'intermédiaire de moyens de transmission classiques tels qu'un réseau local, une ligne téléphonique ou un réseau public comme Internet vers un serveur de bases de données 17. Le serveur de bases de données 17 consolide et gère les données reçues des différentes unités de réception 14,15,16. Les programmes exécutés sur le serveur de bases de données 17 ont pour fonction d'organiser et de traiter les données reçues. A cet effet, un gestionnaire de base de données de type XML par exemple est installé sur le serveur de bases de données. Le serveur 17 sera également équipé des périphériques et des logiciels nécessaires pour permettre l'échange de données bi-directionellement vers le réseau INTERNET. En particulier une interface utilisateur qui peut être accédée à l'aide d'un programme de navigation (browser) est prévue sur le serveur 17 pour permettre la consultation et le traitement des données depuis un site distant.

Grâce à cette interface, un utilisateur connecté au réseau Internet pourra consulter les données de la base de données en visualisant une page HTML qui initiera une transaction vers la base de données et retournera les données demandées. Cette interface permet également d'envoyer un message SMS vers un site de mesure pour requérir une mise à jour des données par exemple.

Le logiciel de gestion des données installé sur le serveur 17 consolide les données reçues des différentes unités de mesures et lorsque les grandeurs mesurées sont telles qu'elles représentent une variation par rapport à une valeur de consigne, un ordre d'achat est automatiquement généré et envoyé sous forme d'une transaction électronique vers un fournisseur du produit concerné. Dans une variante, le logiciel de gestion des données sur le serveur pourra requérir une confirmation avant de passer une commande d'approvisionnement. Cette confirmation peut être envoyée à l'utilisateur ou au gestionnaire par exemple par le biais d'un message électronique.

Dans le cas de la gestion de l'approvisionnement en huile de chauffage précédemment décrite, la grandeur mesurée à savoir le niveau de remplissage de la cuve peut être influencé par des conditions extérieures comme la température ambiante ou la pression atmosphérique par exemple. Dans ce cas le programme de gestion des données s'exécutant sur le serveur 17 va faire l'acquisition de données externes décrivant les grandeurs précitées et les corréler avec les données reçues des capteurs de pression pour ainsi affiner la précision des grandeurs mesurées.

Grâce à cette installation, de nombreux avantages sont obtenus par rapport à une gestion manuelle des commandes d'approvisionnement. Tout d'abord le risque de panne, à cause d'une citerne vide, est considérablement réduit puisque les données sur l'état de remplissage des cuves surveillées sont transmises plusieurs fois par jour vers le serveur qui peut alors prendre les actions requises.

D'autre part, les données émanant des grandeurs mesurées sur les différents sites permettent d'avoir une vue d'ensemble des stocks disponibles et donc d'anticiper les prochaines commandes de remplissage des citernes. Il en résulte pour le prestataire de service qui gère l'installation une meilleure visibilité des quantités nécessaires aux différents utilisateurs. Cette connaissance préalable des besoins futurs permet d'optimiser l'achat de matière première sur les marchés à terme. En conséquence l'utilisateur final bénéficiera de meilleurs tarifs du fait que les commandes individuelles sont groupées et que ces commandes peuvent être anticipées. Enfin la génération d'une requête ou transaction d'achat automatique simplifie considérablement l'administration et le traitement des commandes individuelles.

Le procédé décrit ainsi que l'installation pour sa mise en oeuvre permettent également d'améliorer considérablement la livraison du produit concerné. La connaissance préalable des besoins en produit ainsi que du lieu de livraison est d'une grande aide dans la planification des livraisons ce qui n'est pas possible dans un schéma traditionnel dans lequel le fournisseur doit réagir en fonction de la demande.

La mise à jour en temps réel de la base de données offre également la possibilité de consulter sous forme de données statistiques consolidées, l'état de remplissage d'un parc de cuves, ou de la consommation d'un ensemble de sites. Ces données seront de préférence mises à disposition des utilisateurs du système par le biais du réseau Internet en interrogeant le serveur à l'aide d'un logiciel de navigation.

Dans l'exemple décrit, les unités de réception 14,15,16 sont indépendantes et localisées dans un autre lieu que le serveur de bases de données 17, il est évident qu'un seul ordinateur équipé des périphériques nécessaires pourrait se charger de la réception et du traitement des messages SMS, regroupant de ce fait les fonctions réalisées par les unités de réception 14,15,16 et le serveur central 17.

L'invention a été décrite en relation avec des moyens de téléphonie mobile, il est évident que sans sortir du cadre de l'invention telle que revendiquée ci-dessous, d'autres moyens de communication peuvent être substitués à ceux décrits. En particulier des transmissions filaires ou par onde courte peuvent être envisagées.

Enfin le procédé objet de l'invention a été décrit en relation avec la fourniture d'un bien de consommation et il est également applicable à des services. A titre d'exemple, le besoin en services d'entretien des installations peut être détecté à l'aide d'un capteur ad-hoc et une transaction relative à la planification de l'intervention peut être générée par le procédé décrit.

## Revendications

1. Procédé de gestion de la chaîne d'approvisionnement d'un bien ou d'un service de consommation répétitive, **caractérisé par le fait qu'**il comporte les étapes suivantes:
- acquisition de données représentant la quantité résiduelle de produit sur le site de consommation ;
- transmission à intervalle de temps déterminé des données représentant la grandeur mesurée par le biais d'un réseau de télécommunication;
- réception des grandeurs mesurées et consolidation des données sur un serveur de base de données ;
- comparaison des grandeurs mesurées avec une valeur de consigne préétablie ;
- génération d'une requête d'achat de la quantité de produit requise si les grandeurs mesurées sont inférieures à une valeur de consigne prédéterminée ;
- transmission de l'ordre d'achat au fournisseur de bien ou de service.

2. Procédé selon la revendication 1, **caractérisé par le fait qu'**il comporte les étapes supplémentaires suivantes :
- acquisition de données externes pouvant influencer les grandeurs mesurées par le serveur de base de données;
- corrélation des données précitées avec les grandeurs mesurées reçues.

3. Programme d'ordinateur enregistré sur un support pouvant être lu par une machine et destiné à être exécuté sur un ordinateur, **caractérisé par le fait qu'**il comprend les instructions nécessaires à la mise en oeuvre du procédé selon l'une des revendications précédentes.

4. Procédé de gestion de la chaîne d'approvisionnement en huile de chauffage d'au moins une citerne, **caractérisé par le fait qu'**il comporte les étapes suivantes:
- acquisition sur le site des données représentant la quantité de mazout disponible dans la cuve de l'installation ;
- transmission à intervalle de temps déterminé des données représentant la grandeur mesurée par le biais d'un réseau de télécommunication sans fils;
- réception des grandeurs mesurées par une unité de réception ;
- conversion des données reçues en un format de bases de données et transmission des données mises en forme vers un serveur de bases de données ;
- comparaison des grandeurs mesurées avec une valeur de consigne préétablie ;
- génération d'une requête d'achat de la quantité de produit requise lorsque les grandeurs mesurées sont inférieures à une valeur de consigne prédéterminée ;
- transmission de l'ordre d'achat au fournisseur de bien ou de service.

5. Installation pour la mise en oeuvre du procédé selon la revendication 4, **caractérisée par le fait qu'**elle comporte une unité de mesure (3,5,6) comprenant un capteur (3) immergé dans la cuve (1), ce capteur (3) étant relié à une unité de transmission de données (10) comprenant des moyens pour transférer les informations mesurées vers un serveur (17) de bases de données.

6. Installation selon la revendication 5, **caractérisée par le fait que** l'unité de mesure est constituée d'un capteur de pression (3) en céramique immergé dans la cuve (1) de l'installation et **par le fait que** ce capteur de pression (3) est relié par l'intermédiaire d'un câble (5) à une unité de contrôle (6) qui comprend un contrôleur (11) muni d'un processeur et de mémoire, un module d'alimentation (9) et une unité de transmission (10), l'unité de contrôle (6) étant en outre programmée pour acquérir les grandeurs mesurées et les transmettre par l'intermédiaire de l'unité de transmission (10) vers un serveur de bases de données.

7. Installation selon l'une des revendications 5 à 6, **caractérisée par le fait que** les grandeurs mesurées sont transmises au serveur de bases de données (17) sous la forme d'un message SMS par un réseau de téléphonie mobile par l'intermédiaire d'une unité de réception (14,15,16) comprenant un modem GSM.

8. Installation selon l'une des revendications 5 à 7, **caractérisée par le fait que** l'unité de contrôle (6) est programmée pour décoder un message SMS entrant et interagir par l'intermédiaire du contrôleur (11) sur l'unité de mesure (3,5).
